# EUROPEAN PATENT SPECIFICATION

(11) **EP 2 416 050 B1**
(45) Date of publication and mention of the grant of the patent: **16.12.2015**
(21) Application number: 11006364.1
(22) Date of filing: 03.08.2011
(51) Int. Cl.: F16M 13/02

(54) **Mounting apparatus**
Befestigungsvorrichtung
Dispositif de montage

(30) Priority: 04.08.2010 GB 201013143
(43) Date of publication of application: 08.02.2012
(73) Proprietor: Sukra Limited, Bennett House, Long March Daventry Northamptonshire NN11 4NR (GB)
(72) Inventor: Bennett, Martin Peter, Westerham TN16 2JT (GB)
(74) Representative: Franks & Co (South) Limited

(56) References cited:
- CN-Y- 201 297 483
- DE-U1-202005 019 637
- US-A1- 2003 201 372
- US-A1- 2008 156 949
- US-A1- 2009 251 880

## Description

### Field of the Invention

The present invention relates to mounting apparatus for use in mounting a device on a support support.

### Background to the Invention

A type of mounting apparatus for use in mounting audio visual (AV) equipment on a wall provides a first component for fixing to a wall and a second component for fixing to the item of AV equipment, with the second component configured to mechanically engage with the first component into an arrangement in which the second component is supported by the first component. Mounting apparatus of this type may be used to mount a flat screen display device, such as an LCD television, to a wall. Whether for aesthetic appeal or practicality, it is often desired to mount a flat screen display device closely to the wall, which limits the degree of working space between the rear of the flat screen display device and the wall to which it is to be mounted. As a result, it is desirable to provide mounting apparatus that is convenient to use in this situation. In addition, whether for safety or security purposes, it is desirable to prevent removal of the mounted flat screen display device from the wall. It is therefore also desirable to provide mounting apparatus that incorporates a protective feature for this reason.

A mounting apparatus according to the preamble of claim 1 is disclosed in the utility model publication DE202005019637U1.

### Summary of the Invention

According to the present invention, which is defined by claim 1, there is provided mounting apparatus for use in mounting a device on a support surface, comprising: a mounting element for attachment to a support surface, said mounting element comprising a mounting body presenting a support edge, and a locking bar; said mounting element further comprising a positioning arrangement for movably connecting said locking bar to said mounting body such that a receiving space is provided between said locking bar and said support edge that has a variable depth, and said mounting element is configured such that, when said mounting body is attached to a support surface for use, said positioning arrangement: allows said locking bar to be configured relative to said support edge between a first receiving condition in which the locking bar is spaced apart from the support edge, and mounting hooks of interface elements may be hooked over the support edge of the mounting body, and a second retaining condition in which the locking bar is releasably secured and in which the locking bar is sufficiently close to support edge such that not enough room is provided to allow unhooking of the mounting hooks of the interface elements.

### Brief Description of the Drawings

For a better understanding of the invention and to show how the same may be carried into effect, there will now be described by way of example only, specific embodiments, methods and processes according to the present invention with reference to the accompanying drawings in which:
*Figure 1* shows mounting apparatus for use in mounting a display device on a wall;
*Figure 2* illustrates use of a mounting element comprising a locking bar and of a pair of interface elements;
*Figure* 3 shows a rear view of the pair of interface elements and mounting element of *Figure 1* in an assembly, with the locking bar in a receiving condition;
*Figure 4* shows a rear view of the pair of interface elements and mounting element of *Figure 1* in an assembly, with the locking bar in a retaining condition;
*Figure 5* shows features of the mounting apparatus of *Figure 1* in further detail;
*Figure 6* shows a front view of the pair of interface elements and mounting element of *Figures 1* in an assembly, with the locking bar in a receiving position;
*Figure 7* shows steps in a method of use of the mounting apparatus of *Figure 1*; and
*Figure 8* shows the mounting apparatus of *Figure 1* in use in mounting a device on a support surface, with the locking bar in a retaining position.

### Detailed Description

There will now be described by way of example a specific mode contemplated by the inventors. In the following description numerous specific details are set forth in order to provide a thorough understanding.

### Figure 1

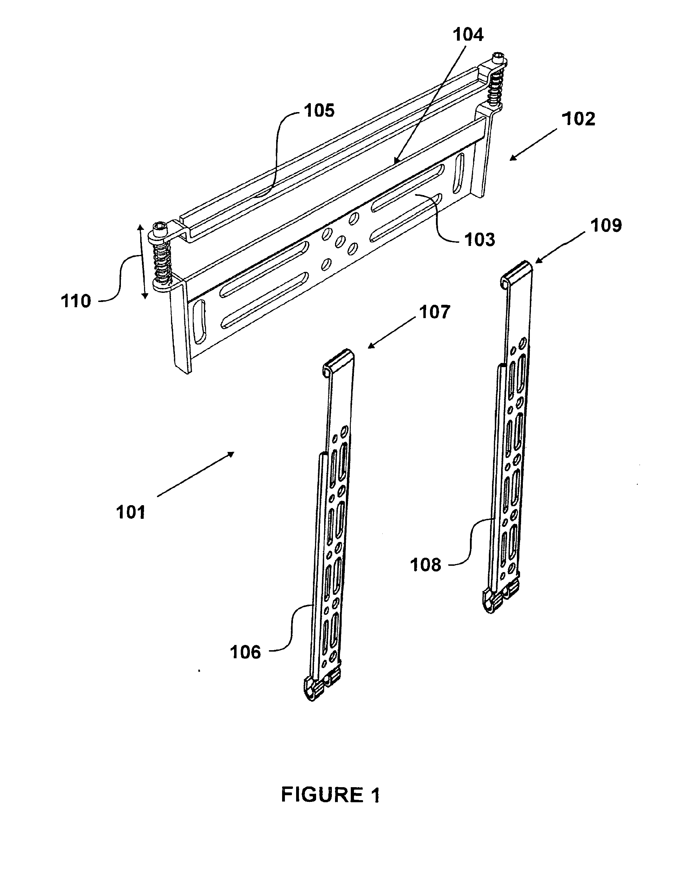

Figure 1 shows mounting apparatus 101 for use in mounting a device on a support surface. For example, the mounting apparatus may be used to mount a display device to a wall. The mounting apparatus 101 comprises a mounting element 102 for attachment to a support surface. The mounting element 102 comprises a mounting body 103 that presents a support edge 104, and a locking bar 105. The mounting element 102 further comprises a positioning arrangement for movably connecting the locking bar 105 to the mounting body 103 such that the locking bar 105 is movable relative to the support edge 104 between a first receiving position and a second retaining position.

The mounting element 102 is configured for use with at least one interface element for attachment to a device, the interface element presenting a mounting hook. In an embodiment, the mounting apparatus further comprises one or more interface elements for attachment to a device and presenting a mounting hook.

As will be described in further detail below, the mounting element 102 comprises an arrangement for movably connecting the locking bar 105 to the mounting body 103 such that the locking bar 105 is movable relative to the support edge 104 between a first receiving condition for allowing a mounting hook of an interface element to be hooked over the support edge 104 such that said interface element is in an assembled condition, and a second retaining condition for preventing unhooking of an interface element from said assembled condition.

According to this illustrated example, the mounting apparatus 101 comprises a pair of interface elements; interface element 106 presents a mounting hook 107 and, similarly, interface element 108 presents a mounting hook 109. In an example, the mounting apparatus comprises a plurality of substantially identical interface elements. In an application, 2 interface elements only are provided for use with a device to be mounted.

In this embodiment, the mounting element 102 comprises a positioning arrangement configured to movably connect the locking bar 105 to the mounting body 103 in such a way that that the locking bar 105 is movable relative to the support edge 104, between a first retaining position and a second retaining position; and configured to releasably secure locking bar 105 in the second retaining position. In this example, the locking bar 105 is movable in a direction as indicated by arrow 110, towards and away from support edge 104.

### Figure 2

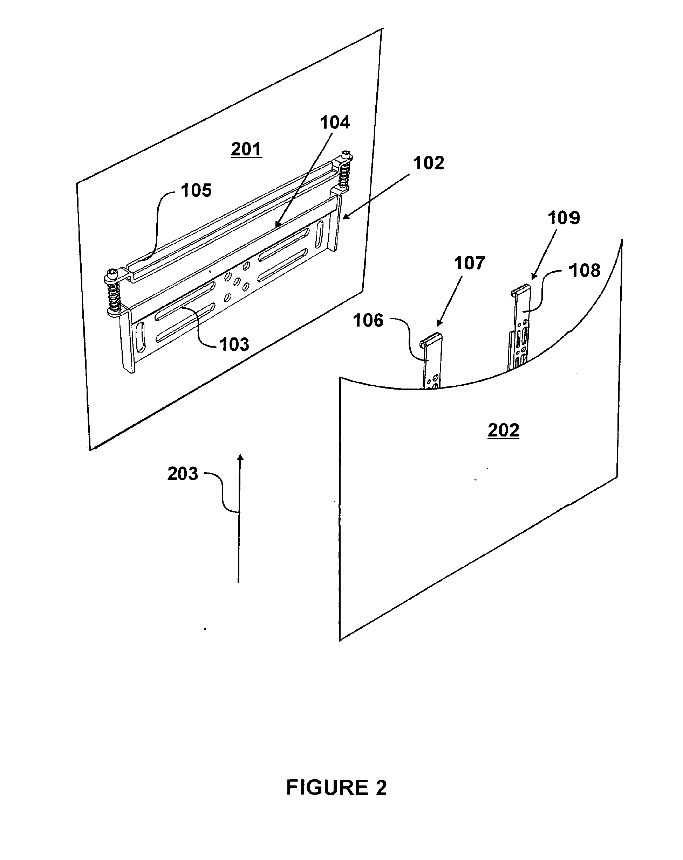

Figure 2 illustrates use of mounting element 102 and interface elements 106 and 108 of the mounting apparatus of Figure 1.

Mounting element 102 is configured to be attached to a support surface 201, such as a wall or any other suitable type of support surface- Interface elements 106, 108 are configured to be attached to the rear of a device 202, such as a flat screen television or, as appropriate, any other type of device to be mounted. As shown, the locking bar 105 of the mounting body 103 and the mounting hooks 107, 109 of the interface elements 106, 108 respectively are to be oriented uppermost, with reference to the substantially upwardly facing vertical direction indicated by arrow 203.

With the mounting element 102 attached to support surface 201 and the interface elements 106, 108 attached to device 202, as shown, the device 202 may now be mounted to support surface 201 by hooking the mounting hooks 107, 109 of the interface elements 106, 108 over the support edge 104 of the mounting body 103.

Once the device 202 is installed on the support surface 201 by means of putting the mounting hooks 107, 109 of the interface elements 106, 108 onto the support edge 104 of the mounting body 103, it is desirable to prevent the device 201 from simply being uninstalled from the support surface 201 by means of lifting the mounting hooks 107, 109 of the interface elements 106, 108 from the support edge 104 of the mounting body 103.

Allowing unimpeded removal of a mounted device is undesirable in circumstances in which safety or security is a concern. For example, if the device is not removed by properly trained operatives, the device may be dropped, resulting in undesirable damage, a potentially hazardous situation and unwanted expense. Further, the device may be removed by unauthorised persons, resulting in unwelcome loss.

### Figure 3

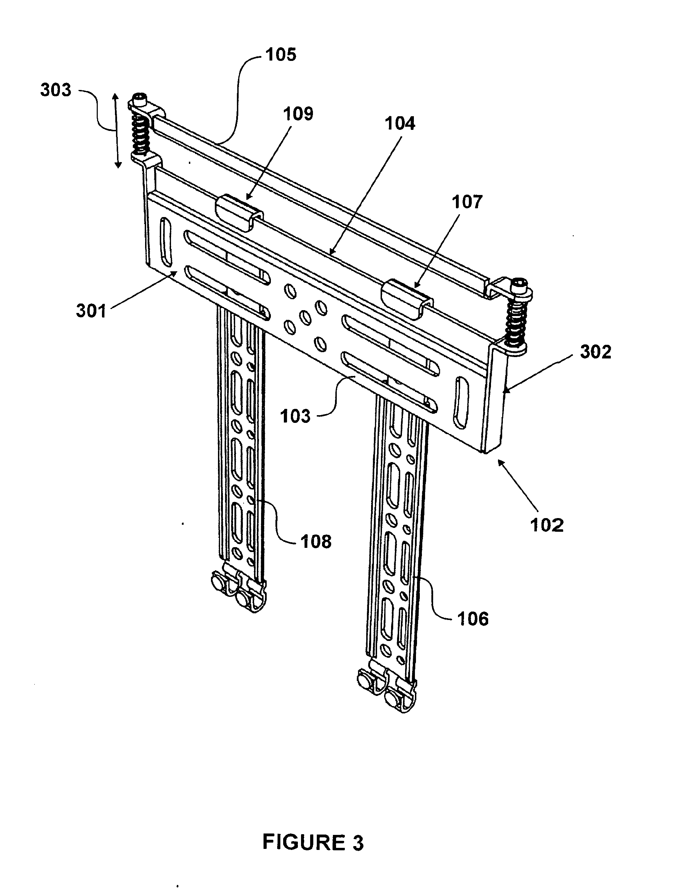

Figure 3 shows a rear view of interface elements 106 and 108 and mounting element 102 of the mounting apparatus of Figure 1 in an assembly, with locking bar 105 in a receiving condition. In a receiving condition of locking bar 105, a mounting hook of an interface element may be hooked over the support edge 104 of the mounting body.

In the shown arrangement, both interface elements 106 and 108 are in the assembled condition with mounting hooks 107 and 109 respectively hooked over support edge 104 of mounting body 103. Mounting element 102 has a rear face 301 and a front face 302. When the interface elements 106, 108 are in use, the respective mounting hooks 107, 109 extend over the support edge 104 of the mounting element 103 from the front face 302 of the mounting body 103 to the rear face 301 thereof. In this Figure, the locking bar 105 is shown in a receiving position in which the locking bar 105 is spaced apart from the support edge 104. Once the interface elements 106, 108 are received into the assembled condition, the locking bar 105 may be configured into a retaining condition. In a retaining condition of locking, bar 105, unhooking of the interface elements 106, 108 from the assembled condition is prevented. According to this illustrated example, the locking bar 105 may now be moved in the direction indicated by arrow 303 into a retaining position.

### Figure 4

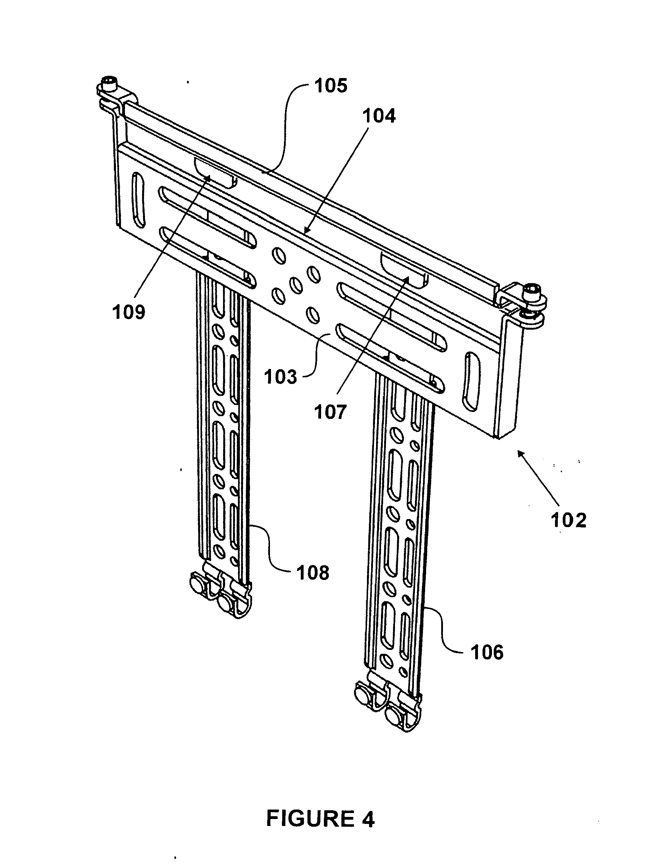

Figure 4 shows a rear view of interface elements 106 and 108 and mounting element 102 of the mounting apparatus of Figure 1 in an assembly, with locking bar 105 in a retaining condition. In a retaining condition of locking bar 105, unhooking of the interface elements 106, 108 from the assembled condition is prevented. This feature advantageously provides protection when the mounting apparatus is in use.

In the shown arrangement, both interface elements 106 and 108 are in the assembled condition with mounting hooks 107 and 109 respectively hooked over support edge 104 of mounting body 103. In Figure 4, the locking bar 105 of the mounting body 103 is in the second receiving condition, which prevents unhooking of the interface elements 106, 108 from the assembled condition. In this Figure, the locking bar 105 is shown sufficiently close to support edge 104 such that not enough room is provided to allow unhooking of the mounting hooks 107 and 109 interface elements 106 and 108 respectively. Preferably, and as shown in this Figure, the mounting element 102 and each of the interface elements 106, 108 are relatively configured such that locking bar 105 can be brought into contact with the mounting hooks 107 and 109 interface elements 106 and 108 respectively when the mounting elements 106, 108 are in the assembled configuration. According to this illustrated embodiment, the positioning arrangement of the mounting element 102 is configured to allow the locking bar 105 to be releasably secured in a retaining condition.

### Figure 5

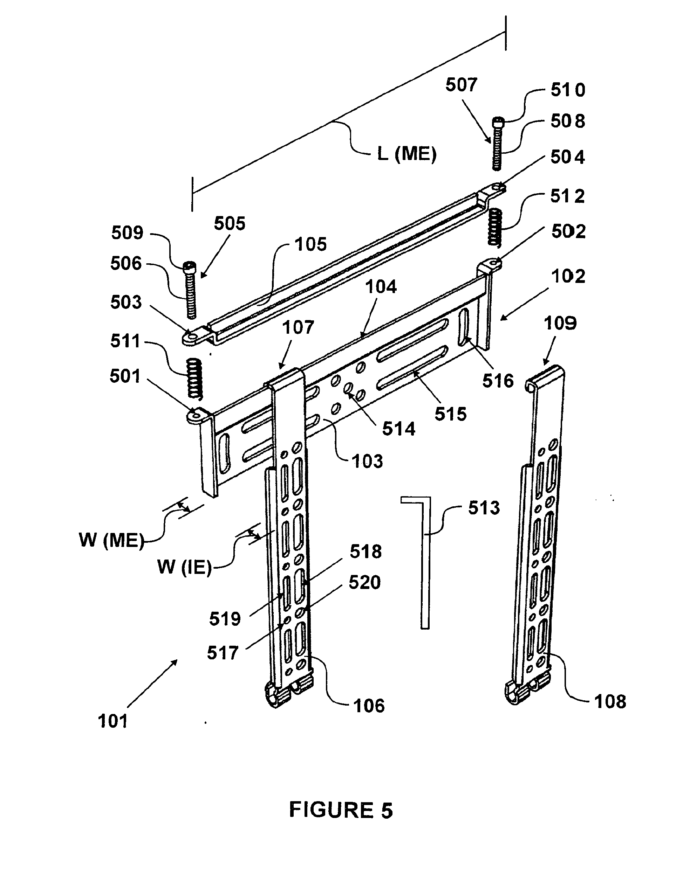

Figure 5 shows features of mounting apparatus 101 in further detail. According to this example, mounting body 103 defines first and second apertures 501, 502 and locking bar 105 comprises third and fourth apertures 503, 504. According to this illustrated example, the first and second apertures 501, 502 are spaced apart and the third and fourth apertures 503, 504 are spaced apart by the same distance. In this way, a pair of corresponding apertures is provided at first and second spaced apart locations.

The positioning arrangement of mounting element 102 comprises a first connector 505 having a first shaft 506 configured to be located through one of the first and second apertures 501, 502 of the mounting body 103 and through one of the third and fourth apertures 503, 504 of the locking bar 105, such that the first shaft 505 is in a located condition. The positioning arrangement of mounting element 102 also comprises a second connector 507 having a second shaft 508 configured to be located through the other of the first and second apertures 501, 502 of the mounting body 103 and through the other of the third and fourth apertures 503, 504 of the locking bar 105, such that the second shaft 505 is in a located condition. In the exploded view of this Figure, first connector 504 is arranged for first shaft 506 to be located through first aperture 501 of mounting body 103 and through third aperture 503 of the locking bar 105 and second connector 507 is arranged for second shaft 508 to be located through second aperture 502 of mounting body 103 and through fourth aperture 504 of the locking bar 105. When each of the first and second shafts 506, 508 of the first and second connectors 505, 507 respectively are in the located condition, the locking bar 105 is slidable along the first and second shafts 506, 508.

According to this example, each of the first and second apertures 501, 502 defined by the mounting body 103 are threaded apertures, each of the third and fourth apertures 503, 504 defined by the locking bar 105 are unthreaded apertures, the first connector 505 is a first screw configured to engage with one of the first and second apertures 501, 502 and the second connector 507 is a second screw configured to engage with the other of the first and second apertures 501, 502. With this arrangement, when the first and second shafts 506, 508 of the first and second screw connectors 505, 507 respectively are in the located condition, the locking bar 105 is releasably securable in a retaining position by tightening of the first and second screw connectors 505, 507. Thus, the position of the first screw head 509 and the second screw head 510 of the first and second screws 505, 507 and the distance of the same from the support edge 104 of the mounting body 103 provide a physical limit to travel of the locking bar 105 away from the support edge 104 of the mounting body 103.

According to this illustrated example, the mounting element 102 comprises a first spring 511 and a second spring 512. Each of the first and second springs 511, 512 is configured to be located around one of the first and second shafts 506, 508, when in the located condition, and between the mounting body 103 and the locking bar 105, such that the spring is in an operative condition. In the exploded view of this Figure, first spring 511 is arranged for location around first shaft 506 of first connector 505, and between the mounting body 103 and the locking bar 105, and second spring 512 is arranged for location around second shaft 508 of second connector 507, and between the mounting body 103 and the locking bar 105. With both the first and second springs 511, 512 in the operative condition, the locking bar 105 is resiliently biased by the first and second springs 511, 512 towards a receiving position. This feature functions to improve the usability of the mounting apparatus 101; the mounting element 102 is normally presented in a condition for receiving a mounting hook 107 of an interface element 106 and does not require any manual manipulation during the step of mounting a device thereto. This is particularly beneficial when the device being lifted is heavy and/or awkwardly shaped and/or working space is limited.

Mounting apparatus 101 may further comprise a tool 513 configured to facilitate rotation of the first and second connectors 505, 507. In this example, the first and second screw heads 509, 510 of the first and second screw connectors 505, 507 respectively are each a security screw head and the tool 513 is configured to engage with the first and second security screw heads 505, 507. It is to be understood that a security screw has a screw head that is designed such that a specific co-operating tool is required to be used the security screw to effect rotation of the security screw in at least the counter clockwise direction (to remove it from an in use condition). Security screws reduce instances of successful opportunistic operation, for example in a theft attempt.

In an embodiment, the mounting body 103 defines a plurality of mounting body securing apertures to facilitate attachment of the mounting body 103 to a support surface such as a wall. The plurality of mounting body securing apertures may comprise different sizes and/or different shapes of aperture and/or apertures in different orientations for accommodating different attachment requirements, apparatus and techniques. Thus, for example, the mounting body 103 defines first, second and third securing apertures 514, 515 and 516 that differ from one another. Securing aperture 514 is located substantially centrally along the length L (ME) of the mounting element 102 to enable post installation levelling.

Each interface element 106, 108 may also define a plurality of interface element securing apertures to facilitate attachment of each interface element 106, 108 to a device to be mounted, such as a flat screen television. The plurality of interface element securing apertures may comprise different sizes and/or different shapes of aperture and/or apertures in different orientations to for accommodating different attachment requirements, apparatus and techniques. Thus, for example, interface element 106 defines first, second, third and fourth securing apertures 517, 518, 519 and 520 that differ from one another. An interface element may define a plurality of interface element securing apertures that are suitable for VESA (Video Electronics Standards Association) and/or non-VESA mounting patterns.

In an embodiment, the locking bar 105 comprises a substantially 2-dimensional cross-sectional shape. This structural feature of the locking bar 105 serves to provide the locking bar 105 with strength. This feature in turn acts to prevent bending of the locking 105, for example during an attempt to remove a mounted device. According to this illustrated example, the locking bar 105 comprises a substantially L-shaped cross-section. This cross-sectional shape advantageously provides strength whilst minimising the weight of the locking bar 105.

It has been recognised that, in applications in which a display device is to be mounted closely to a wall, the amount of working space between the wall and the display device is confined. For example, it is often desired to mount a flat screen display device closely to the wall, for an aesthetic motive. Further, it may be desirable to mount a display device closely to a wall for practical reasons, such as to optimise room space or to avoid obscuring a view in a particular direction.

The mounting element 102 has a mounting element width W (ME). In an embodiment, the each of the interface elements 106, 108 has an interface element width W (IE) that is equal to or smaller than the mounting element width W (ME) and each of the mounting element 102 and interface elements 106, 108 are relatively configured such that when each interface element 106, 108 is in the assembled condition, the width of the resultant assembly is the mounting element width W (ME). This feature advantageously serves to minimise the overall thickness of the mounting apparatus in use.

According to an embodiment, and as in this illustrated example, the first and second connectors 505, 507 are substantially rigid and apertures 501, 502 and apertures 503, 504 are defined by the mounting element 102 and the locking bar 105 respectively, in a co-operating direction such that when each of the first and second shafts 506, 508 of the first and second connectors 505, 507 respectively are in the located condition, the locking bar 105 is slidable along the first and second shafts 506, 508 along a single axis that extends substantially in the general plane of the mounting body 103. Thus, with the mounting body 103 oriented to extend vertically, the locking bar 105 is movable upwards and downwards. This feature advantageously serves to minimise the overall thickness of the volume of the mounting apparatus taken up during configuration of the locking bar 105 between receiving and retaining positions.

Further, according to this illustrated example, a mounting element for use in mounting a device on a support surface is provided that comprises a mounting body presenting a support edge for receiving a mounting hook of an interface element, and a locking bar movably connected to the mounting body such that a receiving space is provided between the locking bar and the support edge that has a variable depth.

The fabrication of the mounting apparatus 101 may comprise any suitable materials or combination of materials. In an embodiment, the fabrication of the mounting apparatus 101 comprises metal, for example steel. In an example, each of the mounting element 102 and the interface elements 106, 108 is fabricated from steel. These components of the mounting apparatus may have any desired finish and/or colouration. In an example, each of the mounting element 102 and the interface elements 106, 108 are powder coated and black. The manufacture of the mounting apparatus 101 may comprise any suitable process or combination of processes. The mounting apparatus 101 may comprise further components, for example spacer devices, as appropriate to provide a mounting kit. It is also to be appreciated that the mounting element 102 is preferably provided as an assembled item, ready for use, for the convenience of the user.

Thus, the positioning arrangement of this illustrated embodiment of mounting element allows simple and convenient reconfiguration of the locking bar between a receiving condition and a retaining condition within a limited amount of space.

### Figure 6

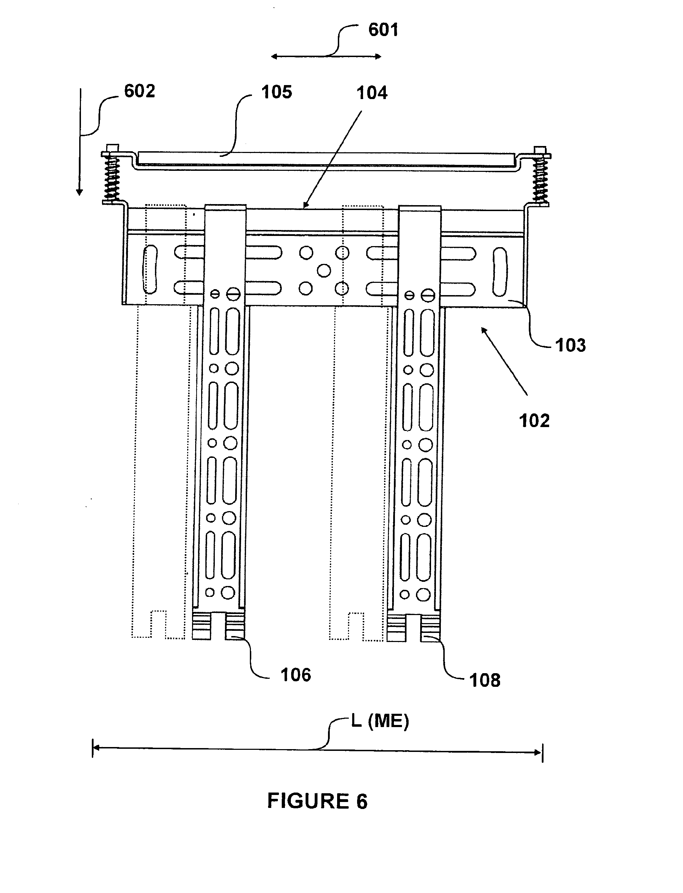

Figure 6 shows a front view of interface elements 106 and 108 and mounting element 102 in an assembly, with locking bar 105 in a receiving position. In an embodiment, and as shown in this Figure, each of the mounting element 102 and the interface elements 106, 108 is relatively configured such that, when an interface element 106, 108 is in the assembled condition, a degree of lateral movement of the interface element along the support edge 104 of the mounting body 103 is allowed. Thus, according to this example, the support edge 104 is substantially straight, such that each of the interface elements 106, 108 when in the assembled condition may be moved along the support edge 104, in a direction indicated by arrow 601. Thus, the mounting apparatus allows for post installation adjustment.

When the interface elements 106, 108 (and in turn the device affixed thereto) are positioned as desired along the length L (ME) of the mounting element 102, the locking bar 105 may be screwed down, in the direction indicated by arrow 602, into a retaining position in which the locking bar 105 clamps the interface elements 106, 108 onto the support edge 104 of the mounting body 103.

### Figure 7

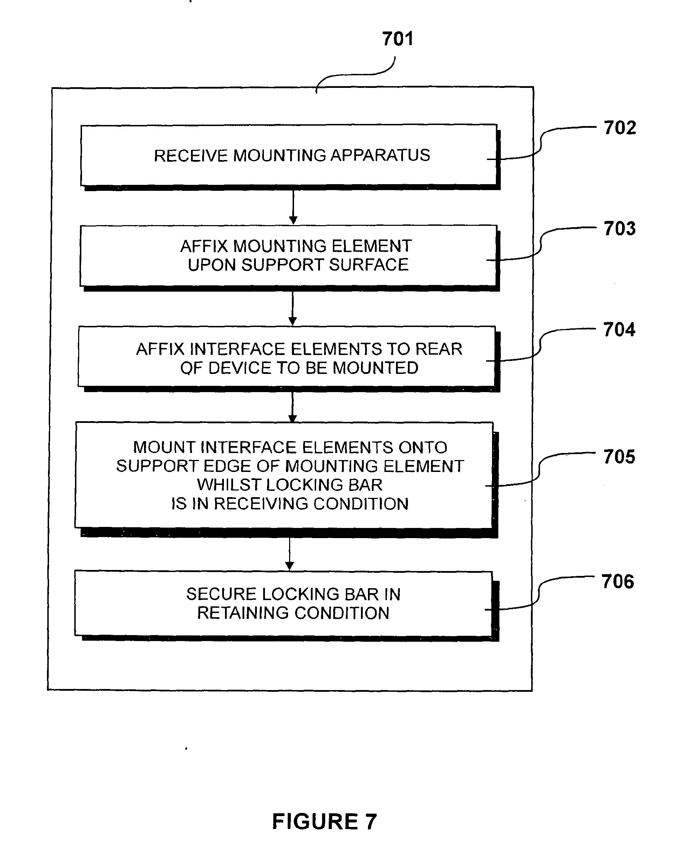

Figure 7 shows steps in a method 701 of use of mounting apparatus as described herein. At step 702, mounting apparatus 101 as described herein is received. At step 703 the mounting element is affixed to a support surface, for example a wall, and at step 704 interface elements are affixed to the rear of a device to be mounted, for example a flat screen television. The interface elements are then mounted onto the support edge of the mounting element whilst the locking bar is in the receiving condition, at step 705. The locking bar is then secured in the retaining condition at step 706.

It is to be understood that the interface elements affixed to the rear of a device to be mounted at step 705 may be received separately to the mounting element affixed upon a support surface at step 704, and hence separately from the mounting apparatus received at step 702.

### Figure 8

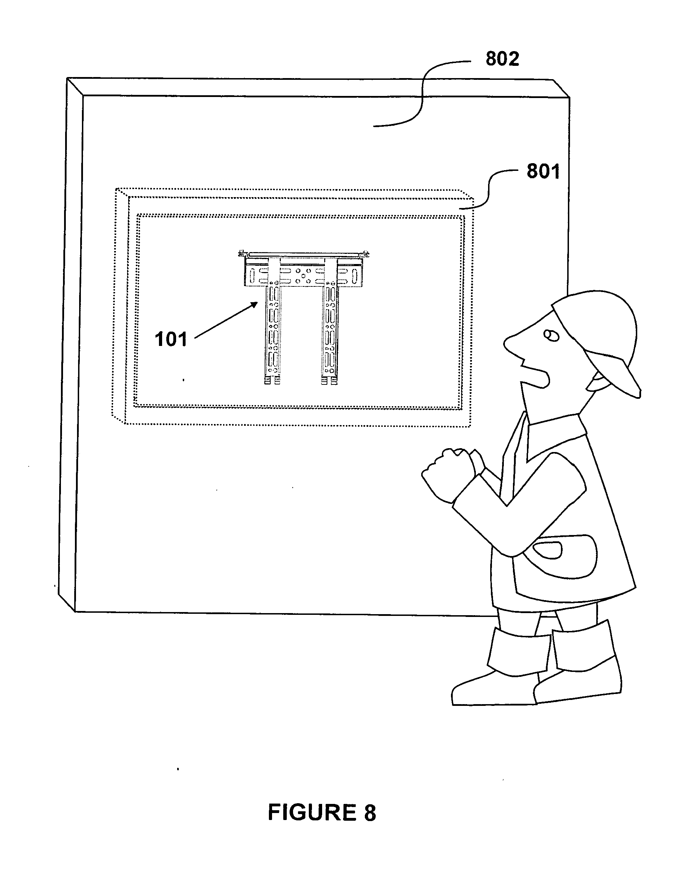

Figure 8 shows mounting apparatus 101 in use. A device 801 (indicated generally by dotted lines) is mounted on a support surface 802 by the mounting apparatus 101. As previously mentioned, the device 801 may be any suitable type of device, for example a display device, and the support surface 802 may be any suitable type of suitable support surface, for example a brick or a concrete wall.

In an example, the assembled mounting apparatus 101 has dimensions of approximately: length: 295 mm, depth 330 mm and width 14 mm. It is to be appreciated that one or more alternative examples of mounting apparatus 101 may be made available for use with different dimensions. In an example, the assembled mounting apparatus 101 can support a maximum weight of approximately 35 kg. Again, one or more alternative examples may be made available for use with the ability able to support a greater or lesser maximum weight.

As detailed above, a mounting element comprising a locking bar as described herein provides for mounting apparatus for mounting a device to a support surface with desirable advantages relating to security and practicality. In particular, a mounting element comprising a locking bar as described herein is usable to prevent unwanted installation of a mounted device from a support surface.

## Claims

1. Mounting apparatus (101) for use in mounting a device (202) on a support surface (201), said mounting apparatus (101) comprising:
a mounting element (102) comprising a mounting body (103) for attachment to a support surface (201) said mounting body (103) presenting a support edge (104) and a locking bar (105);
said mounting element further comprises a positioning arrangement for movably connecting said locking bar (105) to said mounting body (103) such that a receiving space is provided between said locking bar (105) and said support edge (104) that has a variable depth, **characterised in that**
said mounting element (102) is configured such that, when said mounting body (103) is attached to a support surface (201) for use, said positioning arrangement:
allows said locking bar (105) to be configured relative to said support edge (104) between a first receiving condition in which the locking bar (105) is spaced apart from the support edge (104), and mounting hooks (107, 109) of interface elements (106,108) may be hooked over the support edge (104) of the mounting body (103), and a second retaining condition in which the locking bar (105) is releasably secured and in which the locking bar (105) is sufficiently close to support edge (104) such that not enough room is provided to allow unhooking of the mounting hooks (107, 109) of the interface elements (106, 108).

2. Mounting apparatus (101) as claimed in claim 1, wherein:
said mounting body (103) defines first and second apertures (501, 502),
said locking bar (105) defines third and fourth apertures (503, 504),
said positioning arrangement comprises a first connector (505) having a first shaft (506) configured to be located through one of said first and second apertures (501, 502) and through one of said third and fourth apertures (503, 504) such that said first shaft (506) is in a located condition, and
said positioning arrangement comprises a second connector (507) having a second shaft (508) configured to be located through the other of said first and second apertures (501, 502) and through the other of said third and fourth (503, 504) apertures such that said second shaft (508) is in a located condition, and
when each of said first and second shafts (506, 508) is in said located condition, said locking bar (105) is slidable along said first and second shafts (506, 508), such that a receiving space is provided between said locking bar (105) and said support edge (104) that has a variable depth.

3. Mounting apparatus (101) as claimed in claim 2, wherein:
said mounting body (103) defines first and second threaded apertures (501, 502),
said locking bar (105) defines third and fourth unthreaded apertures (503, 504),
said first connector (505) is a first screw configured to engage with one of said first and second threaded apertures (501, 502), and
said second connector (507) is a second screw configured to engage with the other of said first and second threaded apertures (503, 504); and
when each of said first and second shafts (506, 508) is in said located condition, said locking bar (105) is releasably securable in said second retaining position by tightening of said first and second screws.

4. Mounting apparatus (101) as claimed in claim 3, further comprising :
a first spring (511) for location around the shaft (506) of said first screw and between said mounting body (103) and said locking bar (105) such that said first spring (511) is in an operative condition, and
a second spring (512) for location around said the shaft (508) of said second screw and between said mounting body (103) and said locking bar (105) such that said second spring (512) is in an operative condition; and
when each of said first and second springs (511, 512) is in said operative condition, said locking bar (105) is resiliently biased by said first and second springs (511, 512) towards said first receiving position.

5. Mounting apparatus (101) as claimed in claim 3 or claim 4, wherein said first screw and said second screw each have a security screw head (509, 510).

6. Mounting apparatus (101) as claimed in claim 5, further comprising a tool (513) configured to engage with said security screw head.

7. Mounting apparatus (101) as claimed in any preceding claim, wherein said locking bar (105) comprises a substantially 2-dimensional cross-sectional shape.

8. Mounting apparatus (101) as claimed in claim 7, wherein said locking bar (105) comprises a substantially L-shaped cross-section.

9. Mounting apparatus (101) as claimed in any preceding claim, further comprising an interface element (106) for attachment to a display device (202), said interface element (106) presenting a mounting hook (107) for hooking over said support edge (104) such that said interface element (106) is in an assembled condition.

10. Mounting apparatus (101) as claimed in claim 9, wherein each of said mounting element (102) and said interface element (106) is relatively configured such that, when said interface element (106) is in said assembled condition, a degree of lateral movement of said interface element (106) along said support edge (104) is allowed.

11. Mounting apparatus (101) as claimed in claim 9 or claim 10, wherein said mounting element (102) has a mounting element width W (ME) and said interface element (106) has an interface element width W (IE) that is equal to or smaller than said mounting element width W (ME), and each of said mounting element (102) and said interface element (106) is relatively configured such that when said interface element (106) is in the assembled condition, the depth of the resultant assembly is the width of the mounting element W (ME).

12. Mounting apparatus (101) as claimed in any of claims 9 to 11, wherein said interface element (106) defines a plurality of apertures (517, 518, 519, 520) for use in attaching said interface element (106) to a display device (202).

13. Mounting apparatus (101) as claimed in any of claims 9 to 12, comprising a plurality of said interface elements (106, 108).

14. Mounting apparatus (101) as claimed in any preceding claim wherein said mounting element (102) defines a plurality of apertures (514, 515, 516) for use in attaching said mounting element (102) to a wall.

15. Use of mounting apparatus (101) as claimed in any preceding claim for mounting a flat screen display device to a wall.

## Patentansprüche

1. Montagevorrichtung (101) zur Verwendung bei der Montage eines Gerätes (202) auf einer Trägerfläche (201), die Montagevorrichtung (101) umfassend:
ein Montageelement (102), umfassend einen Montagekörper (103) zur Befestigung an einer Trägerfläche (201), wobei der Montagekörper (103) eine Trägerkante (104) und eine Verriegelungsschiene (105) aufweist;
wobei das Montageelement des Weiteren eine Positionierungsanordnung zum beweglichen Verbinden der Verriegelungsschiene (105) mit dem Montagekörper (103) umfasst, sodass zwischen der Verriegelungsschiene (105) und der Trägerkante (104) ein aufnehmender Raum gebildet wird, der eine variable Tiefe hat, **dadurch gekennzeichnet, dass** das Montageelement (102) so konfiguriert ist, dass, wenn der Montagekörper (103) zur Verwendung an einer Trägerfläche (201) befestigt ist, für die Positionierungsanordnung gilt, dass sie:
das Konfigurieren der Verriegelungsschiene (105) relativ zu der Trägerkante (104) ermöglicht zwischen einem ersten aufnehmenden Zustand, in welchem die Verriegelungsschiene (105) einen Abstand zu der Trägerkante (104) aufweist und Montagehaken (107, 109) von Schnittstellenelementen (106, 108) über die Trägerkante (104) des Montagekörpers (103) eingehängt werden können, und einem zweiten haltenden Zustand, in welchem die Verriegelungsschiene (105) lösbar gesichert ist und in welchem sich die Verriegelungsschiene (105) ausreichend nahe zur Trägerkante (104) befindet, dass nicht genug Raum vorhanden ist, dass ein Aushängen der Montagehaken (107, 108) der Schnittstellenelemente (106, 108) möglich ist.

2. Montagevorrichtung (101) gemäß Anspruch 1, wobei:
der Montagekörper (103) erste und zweite Öffnungen (501, 502) definiert,
die Verriegelungsschiene (105) dritte und vierte Öffnungen (503, 504) definiert,
die Positionierungsanordnung ein erstes Verbindungselement (505) umfasst, das einen ersten Schaft (506) aufweist, der so konfiguriert ist, dass er durch eine der ersten und zweiten Öffnungen (501, 502) und durch eine der dritten und vierten Öffnungen (503, 504) hindurch platziert wird, sodass sich der erste Schaft (506) in einem platzierten Zustand befindet, und
die Positionierungsanordnung ein zweites Verbindungselement (507) umfasst, das einen zweiten Schaft (508) aufweist, der so konfiguriert ist, dass er durch die andere der ersten und zweiten Öffnungen (501, 502) und durch die andere der dritten und vierten Öffnungen (503, 504) hindurch platziert wird, sodass sich der zweite Schaft (508) in einem platzierten Zustand befindet, und
wenn sich jeder der ersten und zweiten Schäfte (506, 508) in dem platzierten Zustand befindet, die Verriegelungsschiene (105) entlang den ersten und zweiten Schäften (506, 508) verschiebbar ist, sodass zwischen der Verriegelungsschiene (105) und der Trägerkante (104) ein aufnehmender Raum gebildet wird, der eine variable Tiefe hat.

3. Montagevorrichtung (101) gemäß Anspruch 2, wobei:
der Montagekörper (103) erste und zweite mit Gewinde versehene Öffnungen (501,502) definiert,
die Verriegelungsschiene (105) dritte und vierte nicht mit Gewinde versehene Öffnungen (503, 504) definiert.
wobei es sich bei dem ersten Verbindungselement (505) um eine erste Schraube handelt, die so konfiguriert ist, dass sie in eine der ersten und zweiten mit Gewinde versehenen Öffnungen (501, 502) eingreift, und
wobei es sich bei dem zweiten Verbindungselement (507) um eine zweite Schraube handelt, die so konfiguriert ist, dass sie in die andere der ersten und zweiten mit Gewinde versehenen Öffnungen (503, 504) eingreift; und
wobei, wenn sich jeder der ersten und zweiten Schäfte (506, 508) in dem platzierten Zustand befindet, die Verriegelungsschiene (105) lösbar in der zweiten haltenden Position gesichert werden kann, indem die ersten und zweiten Schrauben festgezogen werden.

4. Montagevorrichtung (101) gemäß Anspruch 3, des Weiteren umfassend:
eine erste Feder (511), die um den Schaft (506) der ersten Schraube und zwischen dem Montagekörper (103) und der Verriegelungsschiene (105) angeordnet ist, sodass sich die erste Feder (511) in einem wirksamen Zustand befindet; und
eine zweite Feder (512), die um den Schaft (508) der zweiten Schraube und zwischen dem Montagekörper (103) und der Verriegelungsschiene (105) angeordnet ist, sodass sich die zweite Feder (512) in einem wirksamen Zustand befindet; und
wobei, wenn sich jede der ersten und zweiten Federn (511, 512) in dem wirksamen Zustand befindet, die Verriegelungsschiene (105) federnd gegen die ersten und zweiten Federn (511, 512) in Richtung der ersten aufnehmenden Position vorgespannt ist.

5. Montagevorrichtung (101) gemäß Anspruch 3 oder Anspruch 4, wobei die erste Schraube und die zweite Schraube jeweils einen Sicherheitsschraubenkopf (509, 510) aufweisen.

6. Montagevorrichtung (101) gemäß Anspruch 5, des Weiteren umfassend ein Werkzeug (513), das so konfiguriert ist, dass es in den Sicherheitsschraubenkopf eingreift.

7. Montagevorrichtung (101) gemäß einem der vorherigen Ansprüche, wobei die Verriegelungsschiene (105) einen im Wesentlichen zweidimensionalen Querschnitt aufweist.

8. Montagevorrichtung (101) gemäß Anspruch 7, wobei die Verriegelungsschiene (105) einen im Wesentlichen L-förmigen Querschnitt aufweist.

9. Montagevorrichtung (101) gemäß einem der vorherigen Ansprüche, des Weiteren umfassend ein Schnittstellenelement (106) zum Befestigen an einem Anzeigegerät (202), wobei das Schnittstellenelement (106) einen Montagehaken (107) zum Aufhängen auf der Trägerkante (104) aufweist, sodass sich das Schnittstellenelement (106) in einem zusammengebauten Zustand befindet.

10. Montagevorrichtung (101) gemäß Anspruch 9, wobei sowohl das Montageelement (102) als auch das Schnittstellenelement (106) im Verhältnis zueinander so konfiguriert sind, dass, wenn sich das Schnittstellenelement (106) in dem zusammengebauten Zustand befindet, ein Ausmaß an seitlicher Bewegung des Schnittstellenelements (106) entlang der Trägerkante (104) möglich ist.

11. Montagevorrichtung (101) gemäß Anspruch 9 oder Anspruch 10, wobei das Montageelement (102) eine Montageelement-Breite W (ME) aufweist und das Schnittstellenelement (106) eine Schnittstellenelement-Breite W (IE) aufweist, welche gleich groß oder geringer ist als die Montageelement-Breite W (ME), und sowohl das Montageelement (102) als auch das Schnittstellenelement (106) im Verhältnis zueinander so konfiguriert sind, dass wenn sich das Schnittstellenelement (106) in dem zusammengebauten Zustand befindet, die Tiefe der resultierenden Baugruppe der Breite des Montageelements W (ME) entspricht.

12. Montagevorrichtung (101) gemäß einem der Ansprüche 9 bis 11, wobei das Schnittstellenelement (106) eine Mehrzahl von Öffnungen (517, 518, 519, 520) definiert, die zum Befestigen des Schnittstellenelements (106) an einem Anzeigegerät (202) verwendet werden.

13. Montagevorrichtung (101) gemäß einem der Ansprüche 9 bis 12, umfassend eine Mehrzahl der Schnittstellenelemente (106, 108).

14. Montagevorrichtung (101) gemäß einem der vorherige Ansprüche, wobei das Montageelement (102) eine Mehrzahl von Öffnungen (514, 515, 516) definiert, die zum Befestigen des Montageelements (102) an einer Wand verwendet werden.

15. Verwendung einer Montagevorrichtung (101) gemäß einem der vorherigen Ansprüche zum Montieren eines Flachbildschirm-Anzeigegeräts an einer Wand.

## Revendications

1. Appareil de montage (101) destiné à être utilisé dans le montage d'un dispositif (202) sur une surface de support (201), ledit appareil de montage (101) comprenant :
un élément de montage (102) comprenant un corps de montage (103) destiné à être attaché sur une surface de support (201), ledit corps de montage (103) présentant un bord de support (104) et une barre de verrouillage (105) ;
ledit élément de montage comprend en outre un agencement de positionnement destiné à raccorder de façon mobile ladite barre de verrouillage (105) audit corps de montage (103) de telle sorte qu'un espace de réception qui a une profondeur variable soit fourni entre ladite barre de verrouillage (105) et ledit bord de support (104), **caractérisé en ce que**
ledit élément de montage (102) est configuré de telle sorte que, quand ledit corps de montage (103) est attaché sur une surface de support (201) pour l'utilisation, ledit agencement de positionnement :
permette à ladite barre de verrouillage (105) d'être configurée relativement audit bord de support (104) entre une première condition de réception dans laquelle la barre de verrouillage (105) est espacée du bord de support (104), et des crochets de montage (107, 109) d'éléments d'interface (106, 108) peuvent être accrochés par-dessus le bord de support (104) du corps de montage (103), et une deuxième condition de retenue dans laquelle la barre de verrouillage (105) est assujettie de façon amovible et dans laquelle la barre de verrouillage (105) est suffisamment proche du bord de support (104) afin de ne pas fournir suffisamment de place pour permettre un décrochage des crochets de montage (107, 109) des éléments d'interface (106, 108).

2. Appareil de montage (101) tel que revendiqué dans la revendication 1, dans lequel :
ledit corps de montage (103) définit des première et deuxième ouvertures (501, 502),
ladite barre de verrouillage (105) définit des troisième et quatrième ouvertures (503, 504),
ledit agencement de positionnement comprend un premier raccord (505) ayant un premier arbre (506) configuré pour être placé à travers l'une desdites première et deuxième ouvertures (501, 502) et à travers l'une desdites troisième et quatrième ouvertures (503, 504) de telle sorte que ledit premier arbre (506) soit dans une condition placée, et
ledit agencement de positionnement comprend un deuxième raccord (507) ayant un deuxième arbre (508) configuré pour être placé à travers l'autre desdites première et deuxième ouvertures (501, 502) et à travers l'autre desdites troisième et quatrième (503, 504) ouvertures de telle sorte que ledit deuxième arbre (508) soit dans une condition placée, et
quand chacun desdits premier et deuxième arbres (506, 508) est dans ladite condition placée, ladite barre de verrouillage (105) est coulissable le long desdits premier et deuxième arbres (506, 508), de telle sorte qu'un espace de réception qui a une profondeur variable soit fourni entre ladite barre de verrouillage (105) et ledit bord de support (104).

3. Appareil de montage (101) tel que revendiqué dans la revendication 2, dans lequel :
ledit corps de montage (103) définit des première et deuxième ouvertures filetées (501, 502),
ladite barre de verrouillage (105) définit des troisième et quatrième ouvertures non filetées (503, 504),
ledit premier raccord (505) est une première vis configurée pour se mettre en prise avec l'une desdites première et deuxième ouvertures filetées (501, 502), et
ledit deuxième raccord (507) est une deuxième vis configurée pour se mettre en prise avec l'autre desdites première et deuxième ouvertures filetées (503, 504) ; et
quand chacun desdits premier et deuxième arbres (506, 508) est dans ladite condition placée, ladite barre de verrouillage (105) peut être assujettie de façon amovible dans ladite deuxième position de retenue par resserrage desdites première et deuxième vis.

4. Appareil de montage (101) tel que revendiqué dans la revendication 3, comprenant en outre :
un premier ressort (511) destiné à être placé autour de l'arbre (506) de ladite première vis et entre ledit corps de montage (103) et ladite barre de verrouillage (105) de telle sorte que ledit premier ressort (511) soit dans une condition opérationnelle, et
un deuxième ressort (512) destiné à être placé autour dudit arbre (508) de ladite deuxième vis et entre ledit corps de montage (103) et ladite barre de verrouillage (105) de telle sorte que ledit deuxième ressort (512) soit dans une condition opérationnelle ; et
quand chacun desdits premier et deuxième ressorts (511, 512) est dans ladite condition opérationnelle, ladite barre de verrouillage (105) est poussée élastiquement par lesdits premier et deuxième ressorts (511, 512) en direction de ladite première position de réception.

5. Appareil de montage (101) tel que revendiqué dans la revendication 3 ou la revendication 4, dans lequel ladite première vis et ladite deuxième vis ont chacune une tête de vis de sécurité (509, 510).

6. Appareil de montage (101) tel que revendiqué dans la revendication 5, comprenant en outre un outil (513) configuré pour se mettre en prise avec ladite tête de vis de sécurité.

7. Appareil de montage (101) tel que revendiqué dans n'importe quelle revendication précédente, dans lequel ladite barre de verrouillage (105) comprend une forme en coupe transversale substantiellement bidimensionnelle.

8. Appareil de montage (101) tel que revendiqué dans la revendication 7, dans lequel ladite barre de verrouillage (105) comprend une coupe transversale substantiellement en forme de L.

9. Appareil de montage (101) tel que revendiqué dans n'importe quelle revendication précédente, comprenant en outre un élément d'interface (106) destiné à être attaché sur un dispositif d'affichage (202), ledit élément d'interface (106) présentant un crochet de montage (107) destiné à s'accrocher par-dessus ledit bord de support (104) de telle sorte que ledit élément d'interface (106) soit dans une condition assemblée.

10. Appareil de montage (101) tel que revendiqué dans la revendication 9, dans lequel chaque élément dudit élément de montage (102) et dudit élément d'interface (106) est configuré relativement de telle sorte que, quand ledit élément d'interface (106) est dans ladite condition assemblée, un degré de déplacement latéral dudit élément d'interface (106) le long dudit bord de support (104) soit permis.

11. Appareil de montage (101) tel que revendiqué dans la revendication 9 ou la revendication 10, dans lequel ledit élément de montage (102) a une largeur W (ME) d'élément de montage et ledit élément d'interface (106) a une largeur W (IE) d'élément d'interface qui est égale à ou plus petite que ladite largeur W (ME) d'élément de montage, et chaque élément parmi ledit élément de montage (102) et ledit élément d'interface (106) est configuré relativement de telle sorte que quand ledit élément d'interface (106) est dans la condition assemblée, la profondeur de l'assemblage qui en résulte soit la largeur de l'élément de montage W (ME).

12. Appareil de montage (101) tel que revendiqué dans n'importe lesquelles des revendications 9 à 11, dans lequel ledit élément d'interface (106) définit une pluralité d'ouvertures (517, 518, 519, 520) destinées à être utilisées pour attacher ledit élément d'interface (106) sur un dispositif d'affichage (202).

13. Appareil de montage (101) tel que revendiqué dans n'importe lesquelles des revendications 9 à 12, comprenant une pluralité desdits éléments d'interface (106, 108).

14. Appareil de montage (101) tel que revendiqué dans n'importe quelle revendication précédente, dans lequel ledit élément de montage (102) définit une pluralité d'ouvertures (514, 515, 516) destinées à être utilisées pour attacher ledit élément de montage (102) sur un mur.

15. Utilisation d'un appareil de montage (101) tel que revendiqué dans n'importe quelle revendication précédente pour monter un dispositif d'affichage à écran plat sur un mur.
